# EUROPEAN PATENT APPLICATION

(11) **EP 1 215 871 A1**
(43) Date of publication of application: **19.06.2002**
(21) Application number: 00410154.9
(22) Date of filing: 14.12.2000
(51) Int. Cl.: H04M 3/533, H04M 3/53, H04M 3/42, H04M 3/50, H04M 3/48

(54) **Auto call-back in a messaging system**

(71) Applicant: Hewlett-Packard Company, A Delaware Corporation, Palo Alto, CA 94304 (US)
(72) Inventor: Amar, Serge, 38240 Meylan (FR)
(74) Representative: Lloyd, Richard Graham

(57) **Abstract**

A process allows the user (2-4) of a telephone messaging system (6) to return calls to a party (5-7) leaving a message in the messaging system. First, the telephone number of a party is recorded at the time the party records a message in the messaging system. Then, when the user consults the recorded message, the recorded number is dialled upon request of the user.

The invention provides a solution to the problem of returning a call to a party leaving a message on a telephone messaging system, while protecting the number of the party leaving a message. It allows the user of a messaging system to easily call back a party who left a message, without having to hang up, search for the number and dial the number. The number of the party leaving a message is protected.

## Description

The invention relates to messaging systems, notably to voice mail telephone systems. It applies to all kinds of messaging systems, e.g. in the case of telephone systems, messaging systems in cellular phone networks, in plain telephone system, or in private exchanges.

Voice mail systems are the most widespread example of telephone messaging systems. They are extensively used in all kinds of telephone networks. They allow a calling party to record a message for a called party, when the called party does not answer the call or programmed such a facility. The called party may thereafter read the message, and act according to the content of the message.

One problem with existing voice mail systems arises when the called party wishes to call back the party who recorded the message. In this case, it is necessary for the called party to hang up, find the phone number of the calling party, and then dial the number to return the call. Even if the calling party left his or her phone number as part of the voice mail, it is usually cumbersome for the called party to write this number while reading the voice mail; in addition, according to the location from which the called party reads his or her voice mails, there may be a need to complete the number left in the voice mail with area codes or the like. This is notably the case for voice mail systems implemented in cellular phones, since voice mails may be consulted by the called party from anywhere in the world. Last, the party leaving a voice mail may wish to be called back, without disclosing his or her phone number; this may for instance prove of interest for commercial calls.

In existing private exchange systems, there is usually provided an indication of the number of the calling party; in case the call is not answered, the user may be prompted to return the call, simply by pressing a key of the telephone. This feature separate from messaging facilities; it is limited to the subscribers of the private exchange system and does not apply to calls originating from an outside network. Last, this feature does not protect the calling party in case he or she does not wish to disclose his or her number.

In cellular phones, it is also usual to provide the user with a list of number of calls received but not answered. Again, this feature is independent from the recording of voice mails. There also exists an auto call feature for automatically calling a user and advising him of incoming messages.

Other examples of caller numbers being recorded for call back purposes are also known. For instance, US-A-5185782 describes an automatic callback arrangement for an automatic call-distribution system that automatically returns a caller's call at a time specified by the caller. The telephone number to which the return call may be placed may be a number that was delivered by the telephone company along with the incoming call, or may be a number explicitly supplied by the caller. Similar systems are described in US-A- 4788715 and US-A-5155761.

US-A-5311583 describes an international telephone calling system in which a user is invited to record a callback number for the event that an international call they initiate cannot be set up. The user is automatically called by the system as soon as it becomes possible to establish the call.

The invention is directed to the provision of a system in which a calling party leaving a message in a messaging system, such as a voicemail system is provided with the ability to record his or her phone number. The recorded phone number may then be used for allowing the called party to return the call, at the time the called party reads the recorded message. The system is implemented in a mannner that makes it possible to hide the number of the calling party from the user.

More specifically, the invention provides a process for allowing a user of a messaging system to return calls to a party leaving a message for them in the messaging system, comprising the steps of: recording a callback number of the party at the time the party records a message in the system; and establishing a communication between the user and said recorded number upon request of the user consulting said recorded message, without enabling said recorded number to be accessed by said user such that they could independently set up such a communication.

The ability to protect the recorded number from access by the called party has many advantages for the privacy of the caller, for instance it prevents capture of the number by the called party for subsequent use in telemarketing for instance, or storage in a database of customer contacts. In addition, the caller may not wish to disclose information that may be incidentally revealed by their callback number, such as their precise whereabouts. To achieve this, the process can be carried out, for instance, outside the terminal apparatus that the user uses to access to the messaging system, the facility being provided as a service to the user of the messaging system.

The recorded number is preferably the telephone number from which the calling party records a message. It may also be a combination of codes and of the telephone number from which the calling party records a message. In one embodiment of the invention, the recorded telephone number is input by the calling party.

Preferably, the step of establishing the communication is carried out after the user has consulted said recorded message.

The invention also provides a messaging system implemented in a telephone network, the system being connected to a switch, and having an auto call back service for recording a telephone number of the party at the time the party records a message in the system, said service further establishing a communication with said recorded number upon request of the user consulting said recorded message, without providing said recorded number to said user.

A messaging system embodying the invention will now be described, by way of non-limiting example, and in reference to the accompanying drawings, where
- figure 1 is a schematic view of a telephone system embodying the invention;
- figures 2 and 3 are flowcharts of the operation of the system of figure 1.

In the rest of the description, the invention is described in reference to the example of a voice mail telephone system. It should however be understood that this is but one example of a messaging system to which the invention applies. The invention could be applied e.g. to video messaging systems or e-mail systems.

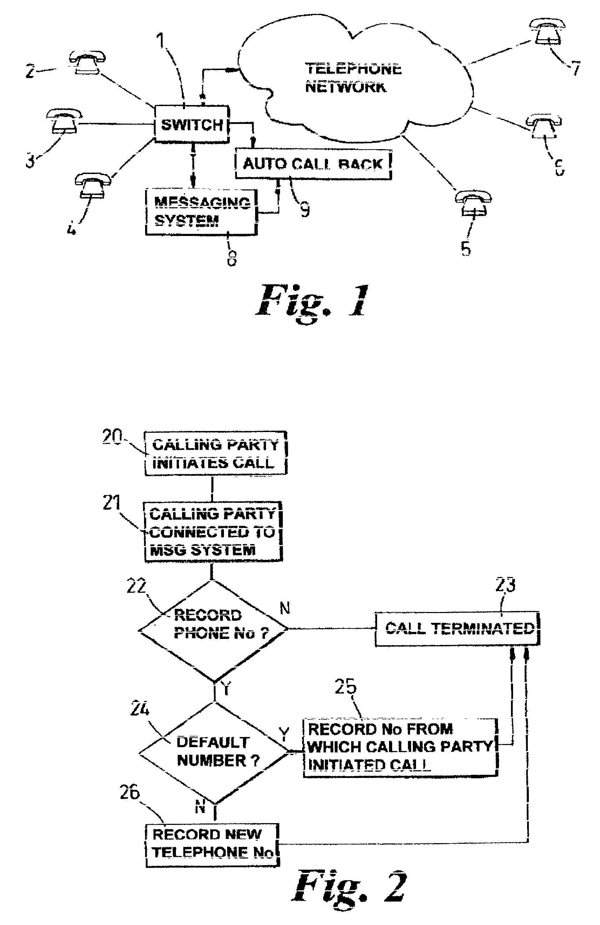

Figure 1 shows a schematic view of a telephone system embodying the invention. The system comprises a switch 1, which may be a public or private switch. The switch is connected to a telephone network, e.g. the plain telephone network. A number of subscribers 2-4 are connected to the switch; calls may also be received from parties not connected to the switch, e.g. from subscribers 5-7 connected to the network. There is also provided a voice mail system 8 connected to the switch. The invention suggests providing in addition to these known features an auto call back service 9 implemented in the form of appropriate service logic, connected to the voice mail system and to the switch. The auto call back service 9, just like the voice mail system 8 may be implemented in many different ways; it could be part of the switch, may be provided as an additional software or hardware in another system. Advantageously, service 9 is not implemented in the terminal apparatus - the telephone - of a subscriber 2-4; this makes it possible to guarantee that numbers may be hidden from the user, with increased security.

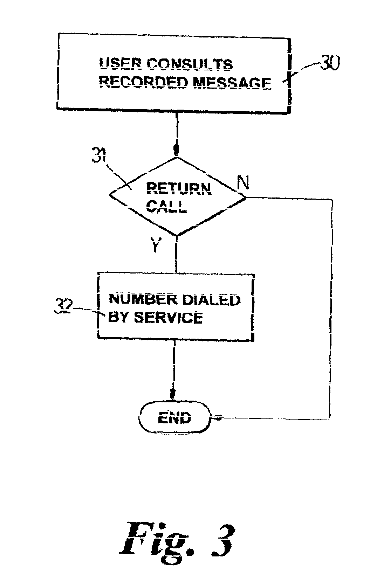

The operation of the system of figure 1 is now described in reference to figures 2 and 3. Figure 2 shows a flowchart of a first part of the process according to the invention, corresponding to the recording of a message and of a telephone number by a calling party. In step 20, a party calls a user 2 of the telephone messaging system. The party may be another subscriber of the telephone messaging system, or another subscriber 5-7 connected to the network. In both cases, the switch 1 is able to retrieve the number of the calling party, and where applicable the area code or national code of the calling party.

In step 21, the calling party is connected to the messaging system 8. This may occur because the called user does not answer the call, because the line of the called user is busy, or because the user has programmed this facility in the switch. The calling party is prompted to record a message, in a way known per se.

In step 22, after the message is recorded, the calling party is prompted by the messaging system to record his or her phone number. The calling party may refuse - e.g. in case he or she does not wish to be called back. In this case, the message is recorded, and no number will be provided to the user of the messaging system. The process is ended at step 23, where the calling party terminates the call. Else, the calling party may record a number for allowing the user of the messaging system to call back; in this case, the process goes to step 24.

In step 24, the calling party is given the option to record the number of the telephone from which he or she is calling, or to record another number. In the first case, the process goes to step 25, else to step 26.

In step 25, the telephone number from which the calling party is making the call is retrieved by switch 1, and is stored e. g. in the auto call back service 9. It should be noted at this step that the number may be completed to add area codes, national codes, long distance dialling codes, or any digits necessary for allowing the user of the messaging system to call back the calling party. In order to retrieve the number of the calling party, the switch may have to issue an access to the network. The process is then ended at step 23.

In step 26, the calling party is invited to record a telephone number. This may be done in different ways. For instance, the calling party may be requested to dial the number - including area codes or national codes - from the phone he or she is using. Otherwise, the calling party may be requested to enunciate all digits of the number; a voice recognition program may then recognise the digits. In both cases, the messaging system is provided with a number that may be recorded in the auto call back service 9. The process is then ended at step 23.

Thus, if the calling party wishes to leave a number for being called back, this number is stored at the time the message is recorded. One should understand that the flowchart of figure 2 may be simplified or changed, while still allowing the calling party to record a telephone number. The order of steps may be changed, e.g. for prompting the calling party to record a number before recording a message, or for providing default settings; for instance, one could always record the number from which the calling party initiated the call; one may decide not to record a new telephone number. One may additionally give the calling party the choice of disclosing or not the number to the user of the messaging system. These different choices may be offered to the calling party at any time, i.e. before recording the message or after, separately or together.

Figure 3 shows a flowchart of a second part of the process according to the invention, corresponding to the reading of a recorded message and of a telephone number by the user of the messaging system. In step 30, the user of the messaging system consults the message. This may be caused by the messaging system calling the user, by the messaging system sending a message to the user, or by any other way known per se.

In step 31, after the user has read the message, the user may be prompted to return call to the calling party who left the message. This may be offered e.g. as one option among the option for handling messages (skip, delete, back, etc.). If the user decides to return the call, the process goes to step 32. Else, the process is ended.

In step 32, it is ascertained that the user wishes to return the call to the calling party who left a message. The auto call back service may then dial the recorded number, and the user is connected to the calling party; there is no need for the user to hang up, nor to dial the number. It should be noted here that the user is not provided with the number of the calling party and cannot access it, at least in a form that would enable them to independently set up a communication using the number; this makes it possible to protect the number of the calling party, that is to allow user of the messaging system to return calls without disclosing the number of the calling party. After step 32, the process is ended.

As for the flowchart of figure 2, the flowchart of figure 3 may be amended. For instance, where the calling back of the recorded number fails in step 32, the program may offer to proceed with another try at a later time.

If the messaging system allows messages to be browsed from any location, the fact that the number is dialled by the call back service 9 may allow a proper connection to be established, whatever the location of the user : indeed, the number is dialled by the call back service, so that the location of the user may be taken into account when the number is dialled. This makes it possible to return calls from any location, even if the call is not returned from the usual telephone of the user. In the example, the number is dialled after the user consults a message; it may be dialled after all messages are consulted, or more generally at any time during the consulting of messages recorded in the messaging system.

It is also possible to limit in time the use of the recorded number. This may be carried out by erasing in the call back service the number of the calling party, after a certain time period elapses. The time period may be set as a default parameter of the call back service, or it could be chosen by the person leaving the message. One may also limit the number of times that the user will be allowed to return the call. These features ensures that the possibility for the user to call back is limited, which protects the party leaving a message.

The invention was disclosed in a specific configuration of the telephone network. As discussed above, it applies to other configurations. The auto call back service may be connected to the switch only through the voice mail system. The invention is preferably implemented in the network to allow the number of the calling party to be protected, where this is necessary; however, the invention could also be applied in private answering machines, provided the network has the ability to present to a called party the number of the calling party and the answering machine has the ability to prevent access to the stored numbers in a trusted manner.. The invention has been described above in an application to telephone systems. It also applies, as discussed above, to video systems. It can be also applied to any other type of messaging system. For example, it could apply as well to e-mail; in this case, the responding party will not have access to the person's e-mail address but would still be able to exchange messages with him/her within a certain time limit. The invention may thus be applied whatever the personal ID type: telephone number, internet address, e-mail address. In this respect a "call" in the present description covers not only telephone call, but also all types of messages exchanged in a messaging system.

## Claims

1. A process for allowing a user (2-4) of a messaging system (6) to return calls to a party (5-7) leaving a message for them in the messaging system, comprising the steps of:
- recording a callback number of the party at the time the party records a message in the system; and
- establishing a communication between the user and said recorded number upon request of the user consulting said recorded message, without enabling said recorded number to be accessed by said user such that they could independently set up such a communication.

2. The process of claim 1, wherein the recorded number is the telephone number from which the calling party records a message.

3. The process of claim 1, wherein the recorded number is a combination of codes and of the telephone number from which the calling party records a message.

4. The process of claim 1, wherein the recorded number is input by the calling party

5. The process of one of claims 1 to 4, wherein the step of establishing the communication is carried out only after the user has consulted said recorded message.

6. The process of any of claims 1 to 5 wherein the steps are carried out outside the terminal apparatus that the user uses to access to the messaging system as a service provided to the user of the messaging system.

7. A messaging system (8)implemented within a telephone network, the system being connected to a switch (1), and comprising an auto call back service (9) having recording logic for recording a telephone number of the party at the time the party records a message in the system and logic for establishing a communication between the user and said recorded number upon request of the user consulting said recorded message, wherein access to said recorded number by said user in a form they could use to independently set up such a communication is prevented.
